# EUROPEAN PATENT SPECIFICATION

(11) **EP 2 867 568 B1**
(45) Date of publication and mention of the grant of the patent: **31.05.2017**
(21) Application number: 12733043.9
(22) Date of filing: 27.06.2012
(51) Int. Cl.: F04D 29/42, E03B 9/02, F16L 37/098

(54) **CONNECTOR ASSEMBLY**
VERBINDERBAUGRUPPE
ENSEMBLE RACCORD

(43) Date of publication of application: 06.05.2015
(73) Proprietor: Husqvarna AB, 56182 Huskvarna (SE)
(72) Inventor: FREY, Reiner, 89231 Neu-Ulm (DE)
(74) Representative: Finkele, Rolf
(86) International application number: PCT/EP2012/062517
(87) International publication number: WO 2014/000795

(56) References cited:
- EP-A1- 0 899 461
- WO-A2-2010/127813
- DE-A1- 4 433 812
- DE-U1-202011 051 043
- FR-A1- 2 881 811
- US-A1- 2010 213 702

## Description

### TECHNICAL FIELD

The present invention relates in general to a connector assembly, and in particular, to a connector assembly for connecting a hose to a liquid source.

### BACKGROUND

Lawns or gardens, require regular watering of the various vegetation, such as, plants, grass etc. The prior art describes various systems and/or methods for watering. Examples include sprinkler systems, drip irrigation systems etc. However, such installations may be expensive and require regular maintenance. Therefore, such installations may not be suitable for residential lawns and gardens which are usually small in size.

A cheaper alternative is to water the lawn or garden using a manually guided hose connected to a water source, such as, a tap of a water mains. However, in case the lawn or garden is located at a substantial distance from the water mains, connecting the hose directly to the water mains may be inconvenient or infeasible. For example, the hose may get entangled if the length of the hose is substantially long.

A subterrean mounted shaft arrangement for installation in an outdoor location to allow access to the water mains is known from WO 2010/127813 A2. Water is supplied to the shaft arrangement via a at least partly subterranean liquit conduit. The shaft arrangement is provided with a nipple member on subterrean level for connection of a garden hose using a snap-in coupler. Coupling of the hose might be inconvenient for elderly or disabled gardeners.

Therefore, in light of the foregoing, there is a need for a convenient and cost effective system for watering lawns and gardens.

### SUMMARY

In view of the above, it is an objective of the present invention to solve or at least reduce the problems discussed above. In particular, the objective is to provide a convenient and cost effective system for connecting a hose to a liquid source.

The objective is at least partially achieved according to a connector assembly, in an embodiment of the present invention. The connector assembly includes a first connector coupled to a liquid source. The first connector includes a nipple member. Further, a rigid pipe unit includes a snap-in coupler which is detachably coupled to the nipple member. A connecting device and/or a stop device is provided is provided on the rigid pipe unit at the end opposite to the snap-in coupler. Moreover, the snap-in coupler includes at least one resilient locking element adapted to engage with the nipple member in order to couple the nipple member with the rigid pipe unit. The snap-in coupler further includes an actuating sleeve adapted to be movable in order to disengage the at least one resilient locking element from the nipple member.

In an advantageous embodiment of the invention the connecting device being adapted to couple with a hose.

In an embodiment, a second connector includes the nipple member, the second connector being detachably connected to the first connector. Further, the second connector is detachably connected to the first connector by a first threaded connection.

In an embodiment, a third connector includes the snap-in coupler, the third connector being detachably connected to the rigid pipe unit. Further, the third connector is detachably coupled to the rigid pipe unit by a second threaded connection.

In an embodiment, a support structure is connected to the rigid pipe unit. In an advantageous realization of this embodiment the support structure includes multiple legs. Further, at least one but preferably each of the legs may include a spike. In an alternative embodiment, at least one supporting member is disposed within the first connector or is extending into it. Further, the at least one multiple supporting member is attached to an inner surface of the first connector or is supported by it.

In an embodiment, an elongate member is connected to the actuating sleeve, the elongate member being connected to a remote actuator. In a further embodiment, the remote actuator includes a trigger assembly. In an alternate embodiment, the remote actuator includes a lever pivotally connected to the rigid pipe unit.

In an embodiment, the first connector includes a cover, the cover being configured to be manually moved to an open position. Further, the rigid pipe unit includes a manipulating member adapted to engage with the cover to move the cover to the open position.

### BRIEF DESCRIPTION OF THE DRAWINGS

The invention will be described in more detail with reference to the enclosed drawings, wherein:
FIG. **1A** illustrates an exploded sectional view of a connector assembly, according to a first embodiment of the present invention;
FIG. **1B** an assembled sectional view of the connector assembly, according to the embodiment of FIG. **1A****;**
FIG. **2** illustrates a sectional view of the connector assembly, according to a second embodiment of the present invention;
FIG. **3** illustrates an actuating mechanism of a remote actuator, according to an embodiment of the present invention;
FIG. **4** illustrates a sectional view of the connector assembly, according to a third embodiment of the present invention; and
FIG. **5** illustrates a sectional view of the connector assembly, according to a fourth embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of devices. In the drawings, like numbers refer to like elements.

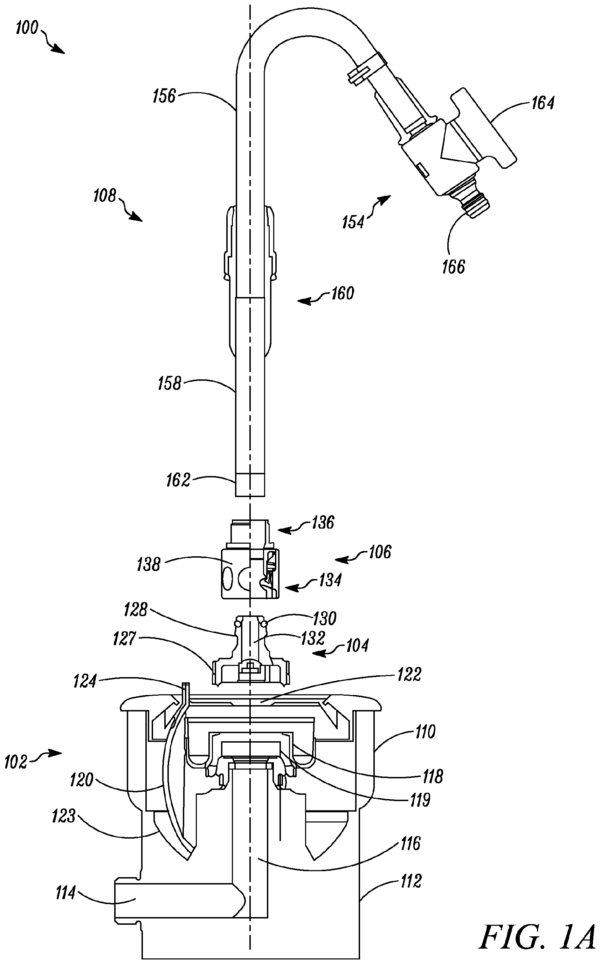

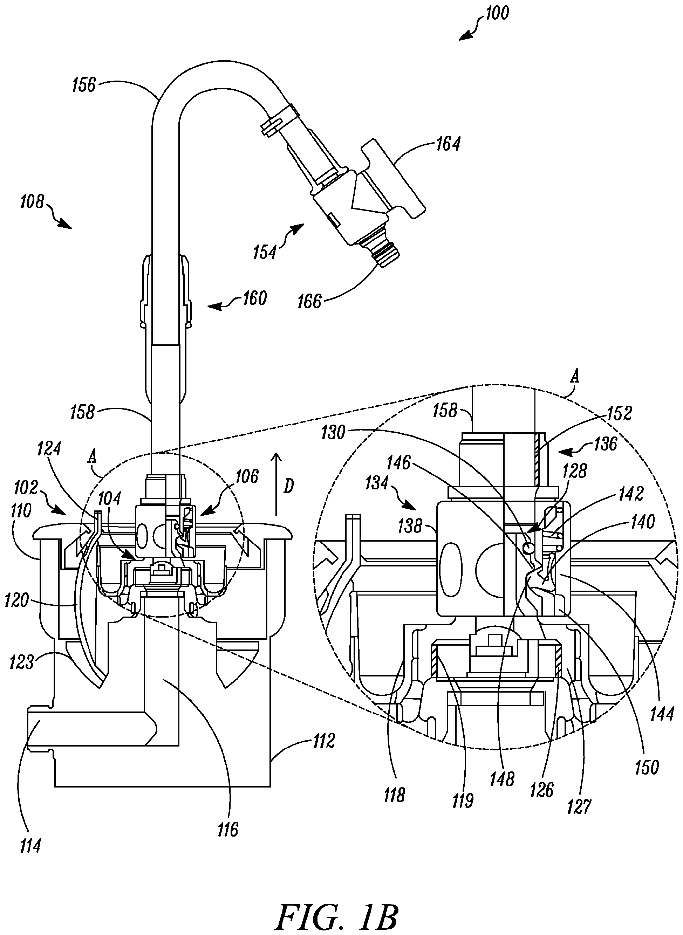

FIGS. **1A** and **1B****,** along with a detailed portion **A** shown in FIG. **1B****,** illustrate various views of a connector assembly **100** for connecting a hose (not shown) to a liquid source, according to a first embodiment of the present invention. In a further embodiment, the connector assembly **100** may be used for transporting water from a remote location (For example, water mains in a residential or a commercial facility) to a hose for watering of a lawn, a garden, field, or the like. However, the connector assembly **100** may be used for transporting any liquid, such as, pesticides, fertilizer etc., within the scope of the invention. The connector assembly **100** includes a first connector **102,** a second connector **104,** a third connector **106** and a rigid pipe unit **108.** The details of the various connectors of the connector assembly **100** will be described henceforth.

As illustrated in FIGS. **1A** and **1B****,** the first connector **102** includes an upper part **110** and a lower part **112.** The lower part **112** includes an inlet **114** which is configured to be coupled to a liquid source. In an embodiment of the present invention, the inlet **114** may include threads for connection with an external liquid conduit (not shown). The inlet **114** is in fluid communication with a passage **116** which terminates in an outlet **118.** Further, the outlet **118** includes an engaging portion **119.** In an embodiment, the engaging portion **119** may include threads for connection with another connector (in this embodiment the second connector **104**). The upper part **110** includes a cover **120** which can be manually moved between a closed position and an open position (as illustrated in FIGS. **1A** and **1B**). The cover **120** may prevent entry of any external particulate matter (such as, dirt, loose vegetation etc.) to enter the first connector **102** through an opening **122** of the upper part **110** when the first connector **102** is not in use. Thus, the outlet **118** and the passage **116** may not get blocked during periods of non-usage. The cover **120** may include a guiding member (not shown) which is movable along a curvilinear surface **123** of the lower part **112** in order to guide the cover **120** from open to closed positions, and vice versa. Further, the cover **120** includes a gripping member **124** to facilitate manual gripping of the cover **120** during opening or closing. In an embodiment, the first connector **102** may be installed in a stationary surface, for example, the first connector **102** may be installed within the ground of an outdoor location. The outdoor location may be a lawn, garden, field, or the like. In the installed condition, the opening **122** of the upper part **110** may be exposed such that the cover **120** can be manually opened and the outlet **118** is accessible from outside. Further, in case the first connector **102** is installed within the ground, the inlet **114** may be connected to an at least partly subterranean liquid conduit which is directly or indirectly connected to a liquid source (For example, water mains). Unless otherwise mentioned, an at least partly subterranean liquid conduit refers to a conduit which may be disposed at least party underground. Further, a portion of the conduit may also be disposed above the ground.

As illustrated in FIGS. **1A** and **1** **B,** the first connector **102** is detachably coupled to the second connector **104** via a first threaded connection **126.** The first threaded connection **126** occurs between the threads on the engaging portion **119** of the first connector **102** with corresponding threads on a mounting member **127** of the second connector **104.** In a further embodiment, the threads on the mounting member **127** are internal threads, while the threads on the engaging portion **119** are external threads. In alternate embodiments, the first connector **102** may be detachably coupled to the second connector **104** by any other connection, for example, snap-in connection, clamped connection etc. Further, the second connector **104** includes a nipple member **128** attached to or integral with the mounting member **127.** The nipple member **128** includes a sealing ring **130** and an internal channel **132.** The internal channel **132** is in fluid communication with the outlet **118** and the passage **116** of the first connector **102** in connected state. In various embodiments of the present invention, the mounting member **127** may include an internal valve (not shown) to automatically shut off flow from inside the mounting member **127** to the internal channel **132,** in case the nipple member **128** is in disconnected state. This prevents leakage of liquid from the second connector **104** in case only the mounting member **127** is in fluid communication with a liquid source but the nipple member **128** is in disconnected state. Further, in various alternate embodiments of the invention, the nipple member **128** may not be a part of a separate connector, but is an integral part of the first connector **102.**

As illustrated in FIGS **1A** and **1B**, the nipple member **128** of the second connector **104** is detachably coupled to a third connector **106.** The third connector **106** includes a snap-in coupler **134** and a threaded coupler **136.** As shown in the detailed portion **A** in FIG. **1B**, the snap-in coupler **134** includes an actuating sleeve **138,** a resilient locking element **140,** and a spring **142.** The actuating sleeve **138** includes a radial support surface **144.** The spring **142** biases the actuating sleeve **138** such that the resilient locking element **140** is disposed above the radial support surface **144.** To couple the nipple member **128** to the snap-in coupler **134,** the snap-in coupler **134** is pressed against the nipple member **128** such that the sealing ring **130** and a projection **146** of the nipple member **128** slide past a cam portion **148** of the resilient locking element **140.** The resilient locking element **140** is adapted to deform during passage of the sealing ring **130** and the projection **146.** As shown in FIG. **1B****,** in coupled state, the projection **146** of the nipple member **128** is locked against the cam portion **148** of the resilient locking element **140.** To uncouple the snap-in coupler **134** from the nipple member **128,** the actuating sleeve **138** is displaced in a direction **D** against the biasing force of the spring **142** such that the resilient locking element **140** moves from the radial support surface **144** into a recess **150.** Thus, the cam portion **148** of the resilient locking element **140** is disengaged from the projection **146** of the nipple member **128.** Subsequently, the snap-in coupler **134** and the nipple member **128** are moved apart relative to each other. The snap-in coupler **134,** as described above, is only exemplary in nature, and any other type of snap-in coupler may be used within the scope of the invention.

Further, the threaded coupler **136** of the third connector **106** is detachably coupled to the rigid pipe unit **108** via a second threaded connection **152.** In various alternate embodiments of the present invention, the snap-in coupler **134** of the third connector **106** may be an integral part of the rigid pipe unit **108.** Further, the rigid pipe unit **108** includes a flow control device **154,** a first pipe **156,** a second pipe **158,** and a clamping device **160.** The second pipe **158** includes a connecting portion **162** for connection with the threaded coupler **136** of the third connector **106.** Further, the first pipe 156 and the second pipe **158** are telescopically connected to each other by the clamping device **160.** Thus, a height of the rigid pipe unit **108** is adjustable. In alternate embodiments, the rigid pipe unit may include only one pipe. Further, the flow control device **154** is connected to one end of the first pipe **156.** The flow control device **154** includes a stop device **164** (here in form of a handle) for regulating the flow of liquid. Further, a hose connector **166,** in fluid communication with the flow control device **154,** is provided for connection with a hose. In assembled condition, as shown in FIG. **1B****,** the connector assembly **100** permits the flow of a liquid from a conduit attached to the inlet **114** of the first connector **102** to the hose based on the configuration of the flow control device **154.** In other embodiments, the rigid pipe unit **108** may not include a flow control device. In an other embodiment (in particular if one only wants to fill up buckets or a watering-can) the the rigid pipe unit **108** may not include a connecting device **166.**

In an embodiment of the present invention, the first connector **102** is installed in the ground. The second connector **104** is also coupled to the first connector **102.** Further, the liquid source is connected to the inlet **114** of the first connector **102** indirectly or directly via the conduit. In various embodiments, the internal valve of the second connector **104** prevents any leakage of the liquid during periods of non-usage. Further, during non-usage, the cover **120** encloses the opening **122** of the first connector **102,** thereby covering also the nipple member **128** of the second connector **104.** Moreover, the third connector **106** is normally connected to the rigid pipe unit **108** via the second threaded connection **152.** The assembly of the third connector **106** and the rigid pipe unit **108** may be stored in a suitable location during non-usage. When a hose is required to be supplied with liquid from the liquid source, the cover **120** has to be first, manually moved to the open position (as illustrated in FIGS. **1A** and **1B**) with the help of the gripping member **124** of the cover **120.** In the open position, the snap-in coupler **134** of the third connector **106** is coupled to the nipple member **128.** This opens the internal valve of the second connector **104,** thereby resulting in fluid communication between the inlet **114** of the first connector **102** and the first pipe **156** of the rigid pipe unit **108.** The handle **164** of the flow control device **154** may be in a closed position during non-usage. Thus, no liquid flows out when the first pipe **156** is in fluid communication with the inlet **114** of the first connector **102.** Finally, a hose is connected to the hose connector **166** and the handle **164** moved to an open position when liquid flow to the hose is desired. To remove the rigid pipe unit **108** after use, the actuating sleeve **138** of the snap-in coupler **134** is moved to an uncoupled position, and the third connector **106** along with the rigid pipe unit **108** are moved upwards.

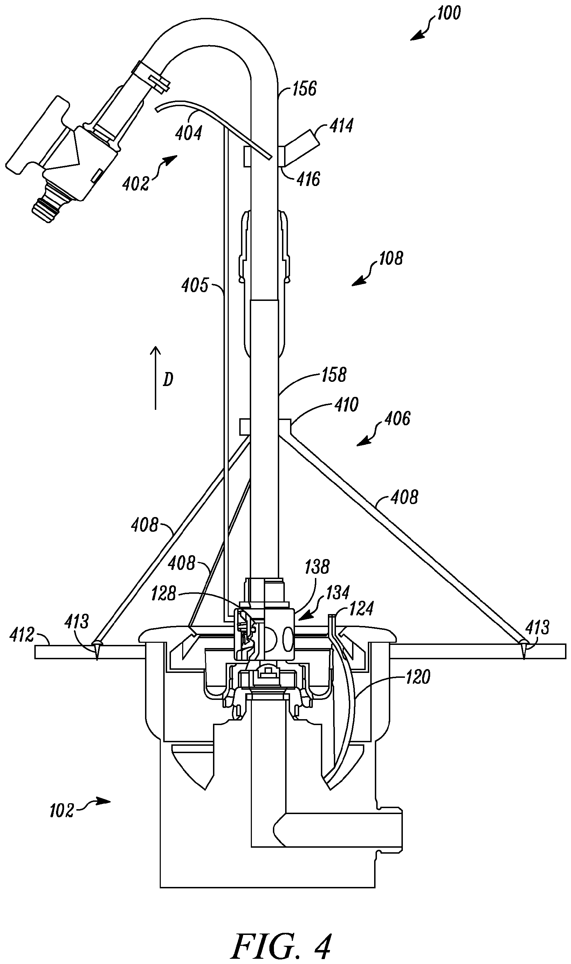

Thus, the connector assembly **100** may provide a convenient connection between a hose and a remote liquid source. This may be of particular use in watering of an outdoor location, such as, gardens, lawns or fields. The remote liquid source may be the water mains. In such a case, the water mains may be located at a large distance from the outdoor location so that it is inconvenient or infeasible to couple a hose directly to the water mains. The first connector **102,** along with the second connector **104** in coupled state, is installed in the ground and an at least partly subterranean conduit connects the inlet **114** of the first connector **102** to the water mains directly or indirectly. In various embodiments, multiple installations of the first connector **102** and the second connector **104** is provided in various locations where watering is required. In this configuration, a network of at least partly subterranean conduits may be provided to connect the multiple installations of the first connector **102** with the water mains. Further, during periods of non-usage, the rigid pipe unit **108** along with the third connector **106** is not connected. Moreover, the first connector **102** may be installed in the ground such that the opening **122** of the first connector **102** is substantially at ground level (shown in FIG. **4**) and at least partially hidden by vegetation. Thus, during periods of non-usage, the first connector **102** may not be an obstacle or have a detrimental effect on the aesthetics of the outdoor location. The network of conduits installation may not also have a negative influence on the outdoor location since the network of conduits is at least partly subterranean. Further, the snap-in coupler **134** may also permit easy coupling and uncoupling of the rigid pipe unit **108** with the first connector **102** and the second connector **104** installation. In cases where there are multiple installations of the first connector **102** and the second connector **104,** a single rigid pipe unit **108** and third connector **106** assembly may be transported to the various installations easily due to portability.

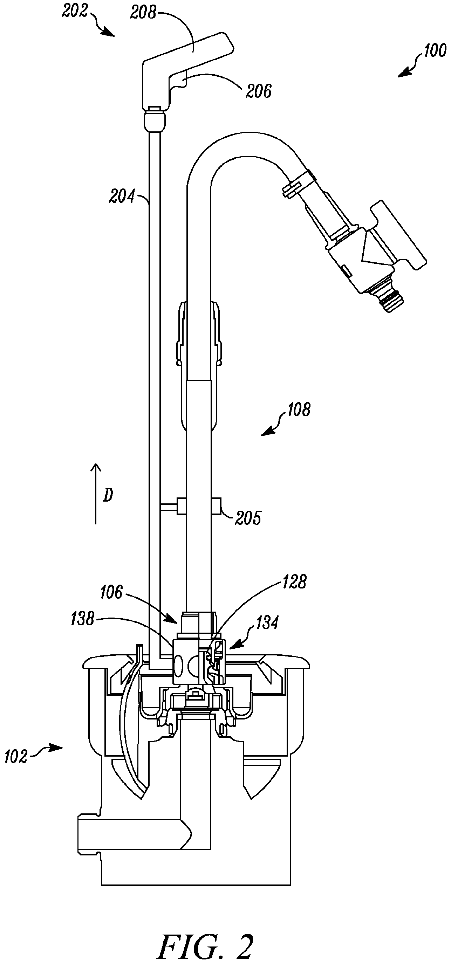

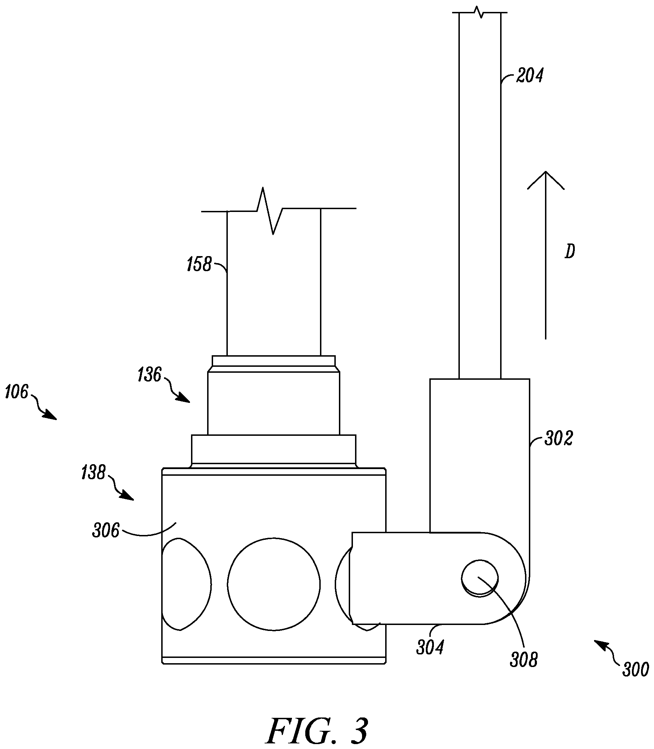

FIG. **2** illustrates a sectional view of the connector assembly **100,** according to a second embodiment of the present invention. As illustrated in FIG. **2****,** a remote actuator **202** is connected to the actuating sleeve **138** of the snap-in coupler **134** via an elongate member **204.** The remote actuator **202** and the elongate member **204** may be coupled to the rigid pipe unit **108** and the actuating sleeve **138** such that they form part of the rigid pipe unit **108** and the third connector **106** assembly. In the embodiment, as illustrated in FIG. **2****,** the elongate member **204** is coupled to the second pipe **158** via a clamping sleeve **205** for support. In such a configuration, even if the first pipe **156** is telescopically adjusted relative to the second pipe **158,** the position of the clamping sleeve **205** need not be adjusted. However, the position of the clamping sleeve **205** may be adjustable along the length of the elongate member **204** depending on support requirements. Additionally, in various embodiments, the length of the elongate member **204** may also be adjustable. Further, the remote actuator **202** is a trigger assembly including a trigger **206** provided with a gripping portion **208.** However, in other embodiments, the remote actuator may be a lever (described in detail in conjunction with FIG. **4**). The trigger **206** may be normally biased by a resilient member (E.g., a spring) in a non-actuating position. The gripping portion **208** facilitates manual actuation of the trigger **206.** On actuation, the trigger **206** moves the actuating sleeve **138** in the direction **D** via the elongate member **204.** The details of the actuating mechanism are described hereinafter in conjunction with FIG. **3****.** Thus, the remote actuator **202** enables a user to remotely move the actuating sleeve **138** to an uncoupled position. This obviates the need for the user to bend down to the ground level and move the actuating sleeve **138.** Further, the rigid pipe unit **108** may be installed in place without bending down to the ground level as the user just needs to push the snap-in coupler **134** onto the nipple member **128.** Therefore, the user may couple and uncouple the rigid pipe unit **108** while in a substantially upright posture. Thus, the ergonomics of the connector assembly **100** may be improved.

FIG. **3** illustrates a detailed view of the actuating mechanism **300** of the remote actuator **202,** according to an embodiment of the present invention. The actuating mechanism **300** includes a first linkage member **302** and a second linkage member **304.** As shown in FIG. **3****,** the first linkage member **302** is connected at an end of the elongate member **204,** while the second linkage member **304** is connected to an outer surface **306** of the actuating sleeve **138.** Further, the first linkage member **302** is connected to the second linkage member **304** via a hinge joint **308.** The hinge joint **308** may be in a form of a pin provided on the first linkage member **302,** the pin being engaged with a corresponding aperture on the second linkage member **304.** However, the pivot joint **308** may be in any other form as long as it permits pivotal motion between the first linkage member **302** and the second linkage member **304.** If the elongate member **204** is moved by the remote actuator **202** in the direction **D,** the first and second linkage members **302** and **304** also move in the direction **D.** Thus, the actuating sleeve **138** also move in the direction **D,** resulting in uncoupling of the snap-in coupler **134** from the nipple member **128.** The actuating mechanism **300,** as described in conjunction with FIG. **3****,** is for exemplary purpose only, and any other actuating mechanism **300** may be used for remote actuation of the actuating sleeve **138** without deviating from the scope of the present invention. For example, in various alternate embodiments, a Bowden cable arrangement may be used. In that case, the elongate member **204** may be the outer casing of the Bowden cable arrangement.

FIG. **4** illustrates a sectional view of the connector assembly **100,** according to a third embodiment of the present invention. As shown in FIG. **4****,** a remote actuator **402** includes a lever **404,** and the elongate member **405** is used to remotely actuate the actuating sleeve **138.** The lever **404** is pivotally connected to the first pipe **156.** The position of the lever **404** relative to the rigid pipe unit **108** may be adjustable. Further, the lever **404** may be normally biased in a non-actuating position. When the lever **404** is pivoted in the direction **D,** the elongate member **405** and the actuating sleeve **138** also move in the direction **D.** Thus, the snap-in coupler **134** uncouples from the nipple member **128.** Moreover, in an embodiment, the actuating mechanism **300,** as described with reference to FIG. **3****,** may be utilised with the remote actuator **402.**

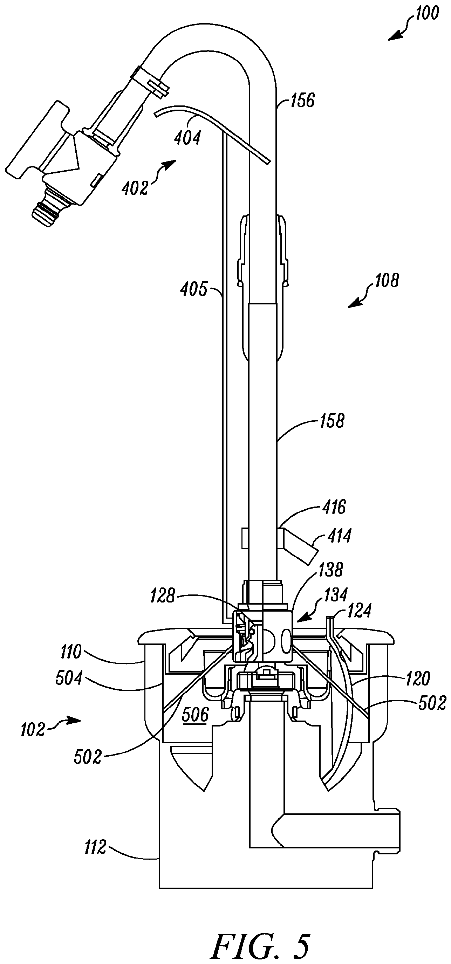

Further, as illustrated in FIG. **4****,** a support structure **406** is connected to the second pipe **158** of the rigid pipe unit **108.** The support structure **406** includes multiple legs **408** extending from an attachment structure **410** to the ground **412.** The attachment structure **410** may be fixed at different vertical locations along the rigid pipe unit **108** in order to cater to different ground levels. Moreover, each leg **408** may be individually adjusted for variable ground contours. In various other embodiments, the support structure **406** may be integrally formed with the rigid pipe unit **108.** The support structure **406** may provide stability to the rigid pipe unit **108** in installed condition and retains the rigid pipe unit **108** in a substantially vertical orientation relative to the ground **412.** Thus, any undesired lateral movement or bending of the rigid pipe unit **108** may be avoided in case any force is applied accidentally to the hose or the rigid pipe unit **108** during usage. Consequently, any unwanted uncoupling of the snap-in coupler **134** from the nipple member **128** may be avoided. The various components of the connector assembly **100** may also be safeguarded against deformation or breakage during usage. Further, each leg **408** includes a spike **413** which pierces the ground **412** for improved support. The support structure **406,** as described in conjunction with FIG. **4****,** is purely exemplary in nature, and any other support structure may be envisioned without departing from the scope of the present invention. For example, multiple supporting members may be provided within the first connector (described in detail in conjunction with FIG. **5**). Alternatively, multiple elastomeric structures (not shown) may be used for support in instead of legs **408** with spikes **413.** The elastomeric structures may be made of rubber.

Further, as shown in FIG. **4****,** a manipulating member **414** is attached to the first pipe **156** via a retaining structure **416.** The manipulating member **414** is adapted to engage with the gripping member **124** of the cover **120** to move the cover **120** to the open position. When the rigid pipe unit **108** is to be installed on the second connector **104,** a user vertically inverts the rigid pipe unit **108** such that the manipulating member **414** may engage with the gripping member **124.** The manipulating member **414** may also be inclined upwards to facilitate the opening of the cover **120** in a vertically inverted orientation of the rigid pipe unit **108.** The cover **120** is then moved to the open position, and the rigid pipe unit **108** oriented to an upright position so that the rigid pipe unit **108** may be mounted onto the second connector **104.** Thus, the manipulating member **414** may enable a user to move the cover **120** to the open position while in a substantially upright posture without bending down to the ground level. In an embodiment, the retaining structure **416** may be attached at different positions along the length of the rigid pipe unit **108** to adjust the position of the manipulating member **414.** In another embodiment, the manipulating member **414** may be integrally formed with the rigid pipe unit **108.** Further, the manipulating member **414** may be located at an upper part of the rigid pipe unit **108** (the first pipe **156** in this embodiment) so that the manipulating member **414** does not interfere with the design and operation of the various connectors of the connector assembly **100** located at the lower portion of the rigid pipe unit **108** in assembled condition. However, in some embodiments, the manipulating member **414** may be located at a lower part of the rigid pipe unit **108** (described with reference to FIG. **5**). Moreover, the shape of the manipulating member **414,** as shown in FIG. **4****,** is exemplary in nature, and various other shapes of the manipulating member **414** may be contemplated as long as the manipulating member **414** can engage with the gripping member **124** of the cover **120.** For example, the manipulating member **414** may be shaped like a hook.

FIG. **5** illustrates a sectional view of the connector assembly **100,** according to a fourth embodiment of the present invention. As shown in FIG. **5****,** multiple supporting members **502** are disposed within the first connector **102.** The supporting members **502** are attached to an inner surface **504** of the upper part **110** and extend upwards in a space **506.** In an assembled state of the connector assembly **100,** as shown in FIG. **5****,** the supporting members **502** engage with the actuating sleeve **138** in order to provide stability to the rigid pipe unit **108.** The location of the supporting members **502** within the first connector **102** may reduce material requirement and also provide a compact structure. Consequently, the supporting members **502** do not interfere with the operation of the various connectors during coupling and uncoupling. The support structure as shown with FIG. 5 is purely of exemplary nature. In an alternative embodiment a single or several supporting member 502 could well be attached to the rigid duct unit **108** (for example somewhat similar to what is shown with support structure 406 in FIG. 4) and extend therefrom into the first connector 102 and being supported by its inner surface **504.**

Further, as illustrated in FIG. **5****,** the manipulating member **414** along with the retaining structure **416** is attached to the second pipe **158** at a lower part of the rigid pipe unit **108.** Such a location of the manipulating member **414** enables the manipulating member **414** to be engaged with the gripping member **124** of the cover **120** without vertically inverting the rigid pipe unit **108.** The manipulating member **414** may also be inclined downwards, in contrast to the embodiment of the invention described with reference to FIG. **4****,** to facilitate the opening of the cover **120** in a vertically upright orientation of the rigid pipe unit **108.**

### Element List:

100 - Connector Assembly
102 - First Connector
104 - Second Connector
106 - Third Connector
108 - Rigid Pipe Unit
110 - Upper Part of the First Connector
112 - Lower Part of the First Connector
114 - Inlet of the First Connector
116 - Passage of the First Connector
118 - Outlet of the First Connector
119 - Engaging Portion of the First Connector
120 - Cover of the First Connector
122 - Opening of the Upper Part
123 - Curvilinear Surface of the Upper Part
124 - Gripping Member of the Cover
126 - First Threaded Connection
127 - Mounting Member of the Second Connector
128 - Nipple Member of the Second Connector
130 - Sealing Ring of the Nipple Member
132 - Internal Channel of the Nipple Member
134 - Snap-In Coupler
136 - Threaded Coupler
138 - Actuating Sleeve
140 - Resilient Locking Element
142 - Spring
144 - Radial Support Surface
146 - Projection of the Nipple Member
148 - Cam Portion of the Resilient Locking Element
150 - Recess
152 - Second Threaded Connection
154 - Flow Control Device
156 - First Pipe
158 - Second Pipe
160 - Clamping Device
162 - Connecting Portion of the Second Pipe
164 - Stop Device
166 - Connecting Device
202, 402 - Remote Actuator
204, 405 - Elongate Member
205 - Clamping Sleeve
206 - Trigger
208 - Gripping Portion
300 - Actuating Mechanism
302 - First Linkage Member
304 - Second Linkage Member
306 - Outer Surface of the Actuating Sleeve
308 - Pivot Joint
404 - Lever
406 - Support Structure
408 - Legs
410 - Attachment Structure
412 - Ground
413 - Spike
414 - Manipulating Member
416 - Retaining Structure
502 - Supporting Members
504 - Inner Surface of the Upper Part
506 - Space
Direction D - Uncoupling Direction of the Actuating Sleeve

## Claims

1. A connector assembly (**100**) connecting a hose to a liquid source via an at least partly subterranean liquid conduit, the connector assembly (**100**) comprising:
a first connector (**102**), the first connector (**102**) comprising a nipple member (**128**),
the first connector (**102**) includes an upper part (**110**) and a lower part (**112**) when installed in the ground of an outdoor location,
the upper part (**110**) includes an opening (**122**) and a cover (**120**) which can be manually moved between an open position and an closed position that encloses the opening (**122**), thereby covering the nipple member (**128**),
the lower part (**112**) includes an inlet (**114**) in fluid communication with a passage (**116**) that terminates in an outlet (**118**) in connection with the nipple member (**128**);
**characterized in that**,
the connector assembly (**100**) further comprises a rigid pipe unit (**108**) comprising a snap-in coupler (**134**), wherein the snap-in coupler (**134**) is detachably coupled to the nipple member (**128**);
a connecting device (**166**) and/or a stop device (**164**) is provided on the rigid pipe unit (**108**) at the end opposite to the snap-in coupler;
the snap-in coupler (**134**) comprises at least one resilient locking element (**140**) adapted to engage with the nipple member (**128**) in order to couple the nipple member (**128**) with the rigid pipe unit (**108**); and
the snap-in coupler (**134**) further comprises an actuating sleeve (**138**) adapted to be movable in order to disengage the at least one resilient locking element (**140**) from the nipple member (**128**).

2. The connector assembly (**100**) of claim 1, wherein when the nipple member (**128**) is not an integral part of the first connector (**102**) a second connector (**104**) comprises the nipple member (**128**), the second connector (**104**) being detachably connected to the first connector (**102**).

3. The connector assembly (**100**) of claim 2, wherein the second connector (**104**) is detachably connected to the first connector (**102**) by a first threaded connection (**126**).

4. The connector assembly (**100**) of any of claims 1 to 3, wherein a third connector (**106**) comprises the snap-in coupler (**134**), the third connector (**106**) being detachably connected to the rigid pipe unit (**108**).

5. The connector assembly (**100**) of claim 1, wherein a support structure (**406**) is connected to the rigid pipe unit (**108**).

6. The connector assembly (**100**) of claim 5, wherein the support structure (**406**) comprising multiple legs (**408**)

7. The connector assembly (**100**) of claim 6, wherein at least one of the legs (**408**) comprises a spike (**413**).

8. The connector assembly (**100**) of claim 1, wherein at least one supporting member (**502**) is disposed within the first connector (**102**) or is extending into it.

9. The connector assembly (**100**) of claim 8, wherein the at least one supporting member (**502**) is attached to an inner surface (**504**) of the first connector (**102**) or is supported by it.

10. The connector assembly (**100**) of claim 1, wherein an elongate member (**204**, **405**) is connected to the actuating sleeve (**138**), the elongate member (**204**, **405**) being connected to a remote actuator (**202**, **402**).

11. The connector assembly (**100**) of claim 10, wherein the remote actuator (**202**) comprises a trigger assembly.

12. The connector assembly (**100**) of claim 10, wherein the remote actuator (**402**) comprises a lever (**404**) pivotally connected to the rigid pipe unit (**108**).

13. The connector assembly (**100**) of claim 1, wherein the rigid pipe unit (**108**) comprises a manipulating member (**414**) adapted to engage with the cover (**120**) to move the cover to the open position.

## Patentansprüche

1. Verbindungsanordnung (100), die einen Schlauch mit einer Flüssigkeitsquelle über ein zumindest teilweise unterirdisches Flüssigkeitsrohr verbindet, wobei die Verbindungsanordnung (100) umfasst:
eine erste Verbindung (102), wobei die erste Verbindung (102) ein Nippelelement (128) umfasst,
wobei die erste Verbindung (102) einen oberen Teil (110) und einen unteren Teil (112) beinhaltet, wenn sie an einem Orts im Freien in der Erde installiert ist,
wobei der obere Teil (110) eine Öffnung (122) und eine Abdeckung (120) beinhaltet, die manuell zwischen einer offenen Position und einer die Öffnung einschließenden geschlossenen Position bewegbar ist, wobei dabei das Nippelelement (128) abgedeckt ist,
wobei der untere Teil (112) einen Einlass (114) beinhaltet, der in Fluidkommunikation mit einem Durchfluss (116) steht, der in einem Auslass (118) in Verbindung mit dem Nippelelement (128) endet;
**dadurch gekennzeichnet, dass**
die Verbindungsanordnung (100) ferner eine steife Rohreinheit (108) umfasst, umfassend eine Einschnappkupplung (134), bei der die Einschnappkupplung (134) abnehmbar an das Nippelelement (128) gekoppelt ist;
wobei eine Verbindungseinrichtung (166) und/oder eine Anhalteeinrichtung (164) an der steifen Rohreinheit (108) am Ende gegenüber der Einschnappkupplung bereitgestellt ist;
wobei die Einschnappkupplung (134) zumindest ein federndes Sperrelement (140) aufweist, das eingerichtet ist mit dem Nippelelement (128) einzugreifen um das Nippelelement (128) mit der steifen Rohreinheit zu koppeln; und
die Einschnappkupplung (134) ferner eine Betätigungshülse (138) umfasst, die bewegbar eingerichtet ist um das zumindest eine federnde Sperrelement (140) von dem Eingriff mit dem Nippelelement (238) zu lösen.

2. Verbindungsanordnung (100), nach Anspruch 1, bei der, wenn das Nippelelement (128) nicht ein integraler Teil der ersten Verbindung (102) ist, eine zweite Verbindung (104) das Nippelelement (128) umfasst, wobei die zweite Verbindung (104) abnehmbar mit der ersten Verbindung (102) verbunden ist.

3. Verbindungsanordnung (100), nach Anspruch 2, bei der die zweite Verbindung (104) durch eine erste Gewindeverbindung (126) mit der ersten Verbindung (102) abnehmbar verbunden ist.

4. Verbindungsanordnung (100), nach einem der Ansprüche 1 bis 3, bei der eine dritte Verbindung (102) eine Einschnappkupplung (124) umfasst, wobei die dritte Verbindung (106) abnehmbar mit der steifen Rohreinheit (108) verbunden ist.

5. Verbindungsanordnung (100), nach Anspruch 1, bei der eine Stützstruktur (406) mit der steifen Rohreinheit (108) verbunden ist.

6. Verbindungsanordnung (100), nach Anspruch 5 bei der die Stützstruktur (406) eine Vielzahl von Beinen (408) umfasst.

7. Verbindungsanordnung (100), nach Anspruch 6, bei der zumindest eines der Beine (408) einen Dorn (413) umfasst.

8. Verbindungsanordnung (100), nach Anspruch 1, bei der zumindest ein Stützelement (502) innerhalb der ersten Verbindung (102) angeordnet ist oder sich in diese erstreckt.

9. Verbindungsanordnung (100), nach Anspruch 8, bei der das zumindest eine Stützelement (502) an einer inneren Oberfläche der ersten Verbindung (102) angebracht ist oder von ihr gestützt ist.

10. Verbindungsanordnung (100), nach Anspruch 1 bei dem ein längliches Element (204, 405) mit der Betätigungshülse (138) verbunden ist, wobei das längliche Element (204, 405) mit einer Fernbetätigung (202, 402) verbunden ist.

11. Verbindungsanordnung (100), nach Anspruch 10, bei der die Fernbetätigung (202) eine Auslöseanordnung umfasst.

12. Verbindungsanordnung (100), nach Anspruch 10, bei der die Fernbetätigung (202) einen Hebel (404) umfasst, der schwenkbar mit der steifen Rohreinheit (108) verbunden ist.

13. Verbindungsanordnung (100), nach Anspruch 1, bei der die steife Rohreinheit (108) ein Handhabungselement (414) umfasst, das eingerichtet ist um mit der Abdeckung einzugreifen um die Abdeckung in die offene Position zu bewegen.

## Revendications

1. Un ensemble connecteur (100) reliant un tuyau à une source de liquide par l'intermédiaire d'un conduit de liquide au moins partiellement souterrain, l'ensemble connecteur (100) comprenant:
un premier connecteur (102), le premier connecteur (102) comprenant un élément de raccord (128),
le premier connecteur (102) comprend une partie supérieure (110) et une partie inférieure (112) quand installé dans le sol d'un emplacement extérieur,
la partie supérieure (110) comprend une ouverture (122) et un couvercle (120) qui peut être déplacé manuellement entre une position ouverte et une position fermée qui enferme l'ouverture (122), recouvrant ainsi l'élément de raccord (128),
la partie inférieure (112) comprend une entrée (114) en communication de fluide avec un passage (116) qui se termine dans une sortie (118) en connexion avec l'élément de raccord (128);
**caractérisé en ce que**
l'ensemble connecteur (100) comprend en outre une unité de tuyau rigide (108) comprenant un coupleur à encliquetage (134), dans lequel le coupleur à encliquetage (134) est couplé de manière amovible à l'élément de raccord (128);
un dispositif de raccordement (166) et/ou un dispositif d'arrêt (164) est prévu sur l'unité de tuyau rigide (108) à l'extrémité opposée au coupleur à encliquetage;
le coupleur à encliquetage (134) comprend au moins un élément de blocage élastique (140) adapté pour engager avec l'élément de raccord (128) pour coupler l'élément de raccord (128) avec l'unité de tuyau rigide (108); et
le coupleur à encliquetage (134) comprend en outre an manchon d'actionnement (138) adapté pour être déplaçable afin de dégager l'au moins un élément de blocage élastique (140) de l'élément de raccord (128).

2. L'ensemble connecteur (100) selon la revendication 1, dans lequel lorsque l'élément de raccord (128) n'est pas une partie intégrante du premier connecteur (102) un deuxième connecteur (104) comprend l'élément de raccord (128), le deuxième connecteur (104) étant relié de façon amovible au premier connecteur (102).

3. L'ensemble connecteur (100) selon la revendication 2, dans lequel le deuxième connecteur (104) est relié de façon amovible au premier connecteur (102) par une première connexion filetée (126).

4. L'ensemble connecteur (100) selon l'une quelconque des revendications 1 à 3, dans lequel un troisième connecteur (106) comprend le coupleur à encliquetage (134), le troisième connecteur (106) étant relié de manière amovible à l'unité de tuyau rigide (108).

5. L'ensemble connecteur (100) selon la revendication 1, dans lequel une structure de support (406) est connectée à l'unité de tuyau rigide (108).

6. L'ensemble connecteur (100) selon la revendication 5, dans lequel la structure de support (406) comprend des branches multiples (408)

7. L'ensemble connecteur (100) selon la revendication 6, dans lequel au moins une des branches (408) comprend une pointe (413).

8. L'ensemble connecteur (100) selon la revendication 1, dans lequel au moins un élément de support (502) est disposé à l'intérieur du premier connecteur (102) ou s'étend vers l'intérieur.

9. L'ensemble connecteur (100) selon la revendication 8, dans lequel l'au moins un élément de support (502) est fixé à une surface intérieure (504) du premier connecteur (102) ou est supporté par celui-ci.

10. L'ensemble connecteur (100) selon la revendication 1, dans lequel un élément allongé (204, 405) est connecté au manchon d'actionnement (138), l'élément allongé (204, 405) étant connecté à un actionneur à distance (202, 402).

11. L'ensemble connecteur (100) selon la revendication 10, dans lequel l'actionneur à distance (202) comprend un ensemble de déclenchement.

12. L'ensemble connecteur (100) selon la revendication 10, dans lequel l'actionneur à distance (402) comprend un levier (404) relié de manière pivotante à l'unité de tuyau rigide (108).

13. L'ensemble connecteur (100) selon la revendication 1, dans lequel l'unité de tuyau rigide (108) comprend un élément de manipulation (414) adapté pour engager avec le couvercle (120) pour déplacer le couvercle dans la position ouverte.
